# EUROPEAN PATENT SPECIFICATION

(11) **EP 4 210 507 B1**
(45) Date of publication and mention of the grant of the patent: **07.08.2024**
(21) Application number: 21783145.2
(22) Date of filing: 10.09.2021
(51) Int. Cl.: A23C 9/13, A23C 9/154, A23J 1/00, A23J 1/12, A23K 10/38, A23L 33/185, A23L 33/22, C12F 3/06, G01F 13/00, G05D 11/13

(54) **METHOD OF PREPARING A MIXTURE OF BREWER'S SPENT GRAIN**
SYSTEM UND VERFAHREN ZUR HERSTELLUNG VON BIERTREBERGEMISCHEN
SYSTÈME ET PROCÉDÉ DE PRÉPARATION DE MÉLANGES DE DRÊCHE DE BRASSERIE

(30) Priority: 11.09.2020 EP 20195783
(43) Date of publication of application: 19.07.2023
(73) Proprietor: Circular Food Technology ApS, 1112 København K (DK)
(72) Inventor: BEUKEL, Karin, 2300 Copenhagen S (DK); RIEMANN-ANDERSEN, Aviaja, Bondo, 1871 Frederiksberg C (DK); KRØLL, Emil, Buhl, 1456 Copenhagen K (DK)
(74) Representative: Plougmann Vingtoft a/s
(86) International application number: PCT/EP2021/075001
(87) International publication number: WO 2022/053648

(56) References cited:
- EP-A1- 2 833 767
- EP-A1- 3 512 352
- WO-A1-2020/039068
- US-A- 1 057 142
- US-A- 4 341 805
- US-A1- 2008 311 246
- US-A1- 2018 014 555

## Description

### Technical field of the invention

The present invention relates to a method of preparing a mixture of brewer's spent grain having a composition corresponding to a requested user input. In particular the present invention relates to a method of preparing uniform mixtures of brewer's spent grain from different compositions of brewer's spent grain having different nutritional composition, flavour and colour, and said uniform mixture of brewer's spent grain corresponds to a requested user input.

### Background of the invention

The focus on avoiding food waste has increased over the past years and therefore the reuse of sidestreams and by-products from the preparation of various food products has increased.

Brewer's spent grain (BSG) is the predominant by-product from the brewing industry and whiskey distillation. BSG typically comprises the barley grain husks obtained as solid portion after the wort production. BSG is currently mainly used as feed for livestock, such as feed for cattle, poultry and pigs. However, an interest in the use of brewer's spent grain in the production of human foods has increased because of the nutritional value of brewer's spent grain, i.e. the protein and fibre content.

For example, it is known that BSG can be used in the bakery industry, for example, by drying and grinding BSG and mix it with conventional flour.

However, the BSG obtained from the production of different types of beer and whiskey will have different colour, have different flavour (taste and aroma) and also the nutrient content will vary. Further, BSG obtained from different breweries and distilleries, but from brewing the same type of beer will also differ from each other. Using different malt in brewing beer is also a parameter that results in different colour, flavour and nutrient content of a BSG, and the breweries may use different malt from different suppliers. This variation of colour, flavour and nutrient content in brewer's spent grain lead to difficulties in preparing, for example, flours of BSG having the same nutritional composition, flavour and colour when using different batches of BSG. Known technology solves this problem by using brewer's spent grain from the same brewery and from preparing the same type of beer. US 2008/0311246 A1 relates to improved methods for the production of consistent quality combined and/or pH-adjusted ruminant feed products using commercial byproducts (e.g., wet distiller's grain products (WDG) and solubles syrup derived from ethanol production) of variable ingredient make-up and density.

However, using BSG from only one brewery and from the production of only one type of beer is a problem, because it makes it difficult to upscale, globalize and customize the production. Further, using BSG from only one brewery can make a business within manufacturing BSG products vulnerable because of possible delivery problems from the one brewery. For example, if the brewery changes the production scale and hence the amount of BSG they can deliver, it will affect the business of manufacturing BSG products. Further, if uncertainty arises with BSG from one brewery, it will affect the manufacturing of BSG products.

Hence, a method of preparing a mixture of brewer's spent grain (BSG) from different sources of BSG, but where the mixture prepared has certain specific criterias/properties with regard to nutrient content, flavour and color would be advantageous. In addition, it would be advantageous to be able to prepare mixtures of BSG that no matter which brewery the BSG is derived from and no matter which type of beer production the BSG is obtained from, makes it possible to obtain a uniform product with regard to nutrient content, color and flavour corresponding to a requested user input.

Further, there is a need to be able to prepare products comprising BSG (with same nutritional content, flavour and colour) from several different composition of BSG to avoid limitations in the manufacturing of BSG products because of delivery problems from one brewery. There is also a need to use all types of BSG from breweries to avoid BSG being wasted.

In particular, there is a need to be able to prepare food products from brewer's spent grain having a unique and uniform flavour, colour and nutritional composition by using brewer's spent grains derived from different raw brewer's spent grains, different breweries, production of different beers etc. Furthermore, a more efficient and/or reliable method of preparing a mixture of brewer's spent grain used for preparing food products, such as a flour or liquids for use in the food industry, would be advantageous.

### Summary of the invention

The invention is defined by the appended claims.

Thus, an object of the present invention relates to providing a method of preparing a mixture of brewer's spent grain having a composition corresponding to a requested user input. Another object is to provide a method that makes it possible to prepare different mixtures of brewer's spent grain, but where the different mixtures are uniform with regard to colour, flavour, and nutrient content. Hence, an object of the present invention is to provide a method of preparing a mixture of different brewer's spent grains where metered amounts of brewer's spent grains are delivered to obtain a mixture based on a requested user input.

In particular, it is an object of the present invention to provide a method of preparing a mixture of brewer's spent grain to be used in preparing an ingredient for the food that solves the above mentioned problems of brewer's spent grains from different breweries having different nutritional composition, different colour and different flavour. It is an object to prepare uniform mixtures of BSG from different types of BSG obtained from breweries such that it is possible to prepare uniform products (i.e. food products) from BSG. Thus, one aspect of the invention is to provide a method of preparing a mixture of brewer's spent grain from different compositions of brewer's spent grain having different nutritional composition, flavour and colour, and wherein the mixture of brewer's spent grain is having a composition corresponding to a requested user input, the method comprises;
- providing a plurality of receptacles (2), each receptacle (2) comprises a brewer's spent grain, where the brewer's spent grain comprises independently of each other:
   ∘ one or more nutrients, a flavour, and a colour;
- providing a database (7) storing information of the content of nutrients, flavour and colour of the brewer's spent grain present in the receptacles (2);
- providing input means (8) adapted to receive an input from a user of a mixture of brewer's spent grain to be obtained by the method, wherein the input from a user to the input means (8) is one or more selected from the following groups of inputs: a requested colour, a requested flavour, a requested nutrient content;
- providing one or more delivery devices (3) each comprising a metering device (5) or weighting cells, said delivery devices (3) are adapted to deliver from the receptacles (2) a metered or weighed amount of brewer's spent grain to a container (4), to form a mixture of brewer's spent grain;
- providing a controller (6) being adapted by suitable software instructions to retrieve from the database (7) information of the content of nutrients, flavour and colour in the brewer's spent grain present in the receptacles (2) and retrieve data of the user inout from the input means (8);
   and wherein the controller (6) is a programmable processor cooperating with a memory storing data and instructions, and wherein once the amount of nutrients, colour and/or flavour are known by the controller 6, it determines the amounts of brewer's spent grain to be delivered from the receptacles (2) corresponding to the user input;
- wherein the controller determines the amount of each of the brewer's spent grain to be delivered from the receptacles (2) to the container (4) on basis of said user input and the information from the database;
- and wherein the controller (6) is being adapted to control the one or more delivery device(s) (3) to deliver individually into the container (4) the metered or weighed amount of brewer's spent grain determined by the controller to be delivered from a receptacle (2) to the container (4).

Another aspect not encompassed by the wording of the claims is to provide a mixture of brewer's spent grain for use in a food product, wherein the mixture comprises two or more brewer's spent grains, wherein the two or more brewer's spent grains are derived from at least two different raw brewer's spent grains.

Yet another aspect of not encompassed by the wording of the claims relates to the use of the mixture of brewer's spent grain according to the invention for preparing an ingredient for use in the food industry.

### Brief description of the figures

Figure 1 shows a schematically overview of the process of preparing brewer's spent grain in beer brewing.
Figure 2 shows an overview of the technical features used in an embodiment of the method of the invention where the method for preparing a mixture of brewer's spent grain corresponding to a requested user input provides a delivery device for each receptacle.
Figure 3 shows an overview of the technical features used in an embodiment of the method of the invention where the receptacles are bags that are placed in baskets and the method provides one delivery device that can be movable connected to the receptacles.
Figure 4 shows the correlation between color and fiber content in different brewer's spent grains.
Figure 5 shows the correlation between color and protein content in different brewer's spent grains.
Figure 6 shows the correlation between color and fat content in different brewer's spent grains.
Figure 7 shows the correlation between color and carbohydrate content in different brewer's spent grains.
Fig 8A shows a plot of different brewer's spent grains (BSGs) in terms of a) the flavour being a buttery, sweat caramellic flavour (measured by 2,3-butanedione) on the y-axis and b) the color (EBC) on the x-axis, with full spectrum of color.
Fig 8B shows a plot of different BSGs in terms of the flavour defined by 2,3-butanedione and the color (EBC). However, the figure focus on only light colored BSGs (a EBC color below 10).
Fig 9 shows a plot of different BSGs in terms of a) the flavour being a chocolate flavour (measured by butanal 2-methyl) on the y-axis and b) the color (EBC) on the x-axis, with full spectrum of color.
Figure 10 shows a plot of different liquid fractions of brewer's spent with regard to the content of butanal 3-methyl (chocolate, nutty, leafy, cocoa flavour) and the colour (EBC).

The present invention will now be described in more detail in the following.

### Detailed description of the invention

### Definitions

Prior to discussing the present invention in further details, the following terms and conventions will first be defined:
Unless defined otherwise, all technical and scientific terms used herein have the same meaning as commonly understood by one of ordinary skill in the art.

The term "brewer's spent grain" (BSG) refers to a by-product obtained from the process of brewing beer and distilling liquor from grains, rice and corns, i.e. whiskey distillation. However, BSG may also come from the preparation of other types of liquor where grains, corn, rice or sugar canes is used as the starting material for preparing the liquor. An example is distillation of vodka from cereal grains that have been fermented. Other examples are distillation of rum from fermented sugar canes or arrack from sugar canes or rice. BSG is the insoluble solids obtained after malting and mashing in the brewing and distilling processes.

The term "raw brewer's spent grain" refers in the context of the present invention to BSG obtained directly from a brewery or distillery and is a non-flowing product having a consistency similar to cooked oatmeal or wetted sawdust and may be referred to as a grain bed.

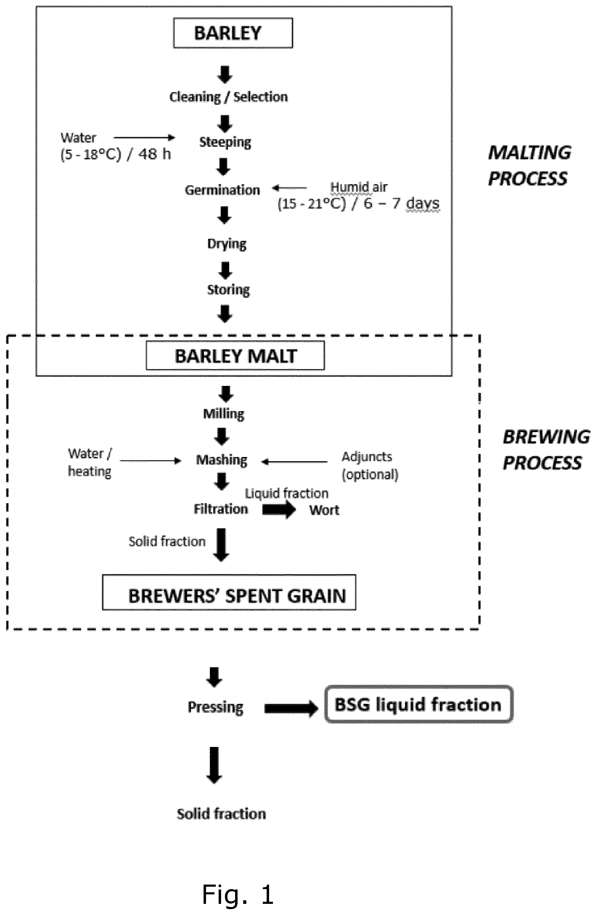

Brewing beer requires only a few ingredients and can typically be divided into four steps or phases, namely the malting step, the mashing step, the fermentation step and the post-fermentation step. However, the malting step can be excluded if there is a need for reduction of expenses or a need for an alternative flavour. Whiskey distillation also involves malting and mashing. In figure 1 is a schematically overview of the process of preparing brewer's spent grain in beer brewing shown.

During the malting step in beer brewing, the barley grains are soaked in water and hence allowed to germinate or sprout until a certain point which allows development of a wide range of enzymes (malting enzymes). The enzymes developed or added are amylases, proteases, and other enzymes. These enzymes will modify the structure of the barley endosperm by breaking down the cell walls and the protein matrix. After germination and sprouting of the barley grains, barley grains are subjected to a kilning step that stops the germination and development of enzymes. The kilning step most often includes heat treatment. The kilning process provides roasting the barley grains.

During the mashing step, the enzymes are released and used for hydrolysis of large macromolecules such as starch and protein. In the mashing step, the malted barley is milled and mixed with water and followed by a step-wise heating in order to break down starch and proteins into subunits that will function as substrate in the following fermentation process. It is believed that the flavouring ingredients are intensified during the malting process. The step-wise heating is because the different enzymes synthesized in the malting step have optimal activity at different temperatures. At the end of the mashing step, a heat treatment is provided to inactivate the enzymes. Before fermentation, the insoluble solids from the mash is removed by filtration to obtain a mash liquid which is called the wort. The wort is used for the fermentation process in the beer production, where the insoluble solids removed is known as brewer's spent grain. In the context of the present invention, this brewer's spent grain obtained directly from the brewery is referred to as raw brewer's spent grain.

In figure 1, the brewer's spent grain obtained after the filtration step is raw brewer's spent grain. Figure 1 also shows an example on how raw brewer's spent grain can be pressed to obtain a liquid fraction of BSG and a solid fraction of BSG.

Raw brewer's spent grain (raw BSG) is thus the insoluble leftover obtained after wort production during brewing of beer and liquor distillation. Raw BSG comprises grain solids, insoluble proteins, carbohydrates, and other materials, where the main solid components of raw BSG is the husk pericarp and seed coat of the malt, which are rich sources of lignin, cellulose, hemicellulose, lipids and protein. Of these components cellulose, hemicellulose and lignin comprises almost 50% of the dry matter content. The raw BSG also comprises a high amount of water, but the water content can vary a lot depending on the brewery delivering the BSG. In raw BSG, approximately 60-85% by weight is water, where approximately 15-40% by weight is solid materials. The water content in raw BSG comprises about 15% by weight free water, where the remaining water (about 85% by weight) is sucked into the grain material and thus not free flowing.

Raw BSG is a great source of protein and fibre. Raw BSG may comprise a content of proteins in the range of 15-25% by weight of dry matter. Raw BSG also comprises a high amount of dietary fibre, such as about 40-60% by weight of dry matter content.

The term "a solid fraction of a brewer's spent grain" refers in the context of the present invention to the solid part of raw brewer's spent grain after liquid has been removed. Further, the term "a liquid fraction of a brewer's spent grain" refers in the context of the present invention to the liquid part of raw brewer's spent grain after solids have been removed. The "solid fraction of brewer's spent grain" and "liquid fraction of brewer's spent grain" can be obtained by passing raw brewer's spent grain through a separation process, such as a pressing, centrifugal or filtration process, and separate liquid from solids.

In the context of the present invention, the term "raw BSG" refers to BSG from the brewing or distilling industry that has not been separated into a solid fraction and a liquid fraction. The raw BSG is the BSG obtained after filtrating the mash to obtain a wort and BSG.

In the context of the present invention, the term "BSG" is an abbreviation of "brewer's spent grain" and "BSG" and "brewer's spent grain" therefore refer to the same and may be used interchangeable. Further, the term "BSG" comprises BSG in any form and therefore covers both raw BSG, a solid fraction of BSG, a liquid fraction of BSG or any other fraction of BSG, such as for example a protein fraction of BSG, a fiber fraction of BSG or other types of fractions.

Hence, the term "BSG" comprises solid types of BSG, for example BSG or a fraction of BSG that have been dried and grinded to a flour. Further, the term "BSG" comprises liquid types of BSG, such as a liquid fraction of BSG, including UHT treated liquid fraction of BSG. The term "UHT" refers to a heat treatment with ultra high temperature as typically understood by the skilled person in the art.

In an embodiment of the present invention, the solid fraction of BSG is obtained by separating raw BSG into a liquid fraction and a solid fraction by use of mechanical treatment. The separation may for example be by use of a screw press, a filter press, a centrifuge, decanter or membrane filtration. The separation process of raw BSG into BSG liquid fraction and solid fraction may also be by filtering through a sive or the like. The nutrients and flavour compounds in the solid fraction and liquid fraction of BSG is not necessarily the same. The solid fraction of BSG will comprise some nutrients and flavour compounds in certain amounts while the liquid fraction of BSG may comprise other nutrients and other flavour compounds. The liquid fraction of BSG may also comprise the same nutrients and flavour compounds as in the solid fraction, but in different amounts. For example, the solid fraction of BSG will comprise a high amount of proteins and fibres.

A brewer's spent grain comprises different nutrients. The term "nutrient" refers in the context of the present invention to ingredients present in the brewer's spent grain having nutritional value. Examples of nutrients are proteins, carbohydrates, lipids, fibres, vitamins, minerals, ash, allergens, antioxidants (for example phenols or polyphenols).

The brewer's spent grain used in the present invention comprises one or more nutrients, wherein the one or more nutrients are selected from the group of proteins, carbohydrates, lipids, fibres, vitamins, minerals, ash, allergens and antioxidants.

In the content of the present invention, the term "fibre" refers to both soluble or insoluble fibres. The soluble fibre easily dissolves in water and is broken down to a gellike substance in the gastrointestinal system while insoluble fibres does not dissolve in water and is left intact through the gastrointestinal system. Insoluble fibres may also be referred to as indigestible carbohydrates or prebiotics, and in the context of the present invention insoluble fibres (prebiotics) refer to carbohydrates that are poorly digested by the digestive system of a mammal.

The term "lipids" comprises in the context of the present invention any type of lipid or fatty acid present in a BSG, such as, but not limited, to free fatty acids, monoglycerides, triglycerides, phospholipids and glycolipids. The free fatty acids may for example be saturated fatty acids, monounsaturated fatty acids or polyunsaturated fatty acids.

The term "ash" refers to any inorganic material remaining after either ignition or complete oxidation of organic matter in a food samples. Ash may also comprise minerals remained.

Brewer's spent grains are known to comprise a different content of nutrients, and have different colour and flavour dependent on the source of the brewer's spent grain. Hence, the amount of for example fibres, non-fibre carbohydrates, protein and lipids varies. Furthermore, the colour of brewer's spent grain varies dependent on the source of brewer's spent grain. The colour may vary in the darkness, where a BSG from for example brewing a stout typically has a dark colour, and where a BSG from brewing a pilsner has a light colour. The flavour compounds will also vary dependent of the source of brewer's spent grain. The production of different beers results in brewer's spent grain having different flavour and colour. Further, different brewer's spent grain will comprise a different content of nutrients.

When preparing a food product from brewer's spent grain, such as a flour or liquid from brewer's spent grain to be used in the food industry, it is not feasible to have thousands of different flours or liquids, but a range of a few flours/liquids should be defined. In addition, when commercializing flours or liquids from brewer's spent grain, a uniformity is a must. It is important that the consumer receives the same product every time and not a product varying dependent of what brewer's spent grain is used. It is necessary that the consumer at any time receives the same product with regard to the parameters: colour, flavour, and nutrient content. However, so far no BSG flours or liquids have been integrated in large scale industrial produced products because BSG from different breweries and from production of different types of beer differs in color, flavour, and nutrient content.

Providing a uniform flour or liquid from BSG has, to the knowledge of the inventors of the present invention, earlier been solved by only using BSG from the same brewery, using BSG from production using the same malt and from the production of one type of liquor, for example beer or whiskey.

The inventors of the present invention have now found out that brewer's spent grain can be analysed with respect to the content of nutrients, flavour and colour (darkness) such that a uniform product can be prepared by mixing different brewer's spent grains in specific amounts dependent of which characteristics of a flour that are wished obtained. Such uniform product can be obtained even though different sources of brewer's spent grain is provided.

In the context of the present invention, when "uniform product" or "same product" is discuseed, it covers products having the same nutrient content in terms of weight (g/100g) including a variation of 5%. Hence, if a user input is to obtain a mixture of BSGs having a protein content of 20g/100g, a mixture of BSGs having a protein content of 19-21g/100g is acceptable and considered "uniform".

A requested EBC colour is considered acceptable and "uniform" with a variation of 40% if the requested user input is an EBC colour of 10 or below. Hence, for at requested EBC colour of 5, a range of EBC colour from 3 to 7 is found acceptable. However, if the requested EBC colour is above 10, the variation considered acceptable and uniform should be within a 20% variation. Hence, if a user input is requesting a mixture of BSGs having an EBC colour of 20, a mixture having a EBC colour of 16-24 is considered "uniform" and acceptable.

In the context of the present invention, the term "content of nutrients" refers to the amount of nutrients in terms on weight or volume.

Further, the term "composition" in the "mixture of brewer's spent grain having a composition" refers to the amount of nutrients, the colour and the flavour of said composition/mixture. The term "mixture" refers to a composition prepared by mixing more than one BSG.

Further, the inventors of the present invention have found that there is a correlation between the colour of a brewer's spent grain and the content of fibre, protein and fat content. For example, the inventors have found that the more dark colour a brewer's spent grain has, the lower is the content of fibres, protein and fat content. However, the darker the brewer's spent grain, the higher is the calorie content and the higher is the carbohydrate content.

The different brewer's spent grains also have different flavours i.e. different taste and different aroma compounds. The term "flavour" refers in the context of the present invention to the combined effect of taste and smell (odour), while the term "aroma" refers to odour/smell only. Further, the term "flavour" refers to comprising one or more flavouring compounds.

Different factors during brewery (for example production of beer) and distillation (for example production of whiskey) leads to different flavour and colour. For example, during the malting process, i.e. in the roasting, the process parameters, such as the temperature and/or the pressure, is responsible for the flavour and colour obtained. Further, different conditions during the mashing process (time, temperature) or different recipies used during the brewing lead to different flavour and colour.

The "information" of the content of nutrients, flavour and colour in the one or more brewer's spent grain is stored in a database and can be provided to and entered the database when receiving a BSG, or the information of the content of nutrients, flavour and colour can be obtained by analysing the BSG.

When using the expression "delivering metered or weighed amounts of brewer's spent grain", it encompasses providing metered or weighed amounts of brewer's spent grain and mix them to make a mixture of brewer's spent grain.

The user input is one or more selected from the following groups of inputs: a requested colour, a requested flavour, a requested nutrient content.

For example, the user input could be referring to a certain colour, or a certain flavour or specific nutrient content of a brewer's spent grain wished obtained or a combination hereof. The user input could for example relate to the amounts or fibres and/or proteins. The user input may be a request based on a combination of parameters/conditions, for example a combination of a certain color and a certain nutrient content.

According to the invention, the metered or weighed amounts of the one or more brewer's spent grain are determined based on one or more selected from the following group of requested user inputs: a requested colour, a requested flavour, a requested nutrient content. In embodiments that are not encompassed by the wording of the claims, also a requested moisture content, a requested volume and a requested particle size. The requested nutrient content may for example be one or more of the following; a requested fibre content, a requested protein content, a requested lipid content, a requested allegen content, a requested antioxidant content, and a requested content of essential amino acid(s). The requested flavour may be a requested taste and/or a requested smell. Particularly, the user input is relating to a requested flavour of the of mixture of brewer's spent grain. However, the user input may also be a desired content of one or more nutrients.

In an aspect of the present invention, the brewer's spent grains (BSG) may be any type of BSG, such as raw BSG, a solid fraction of BSG, a liquid fraction of BSG or any other fraction of BSG. The "BSG" may also be in either liquid form or in solid form, i.e. it may for example be BSG or a fraction of BSG that have been dried and grinded to a flour.

In a preferred embodiment of the present invention, the brewer's spent grains used are solid fractions of brewer's spent grain. In a further embodiment, the solid fractions of brewer's spent grain has a moisture content of 15-70% by weight, preferably 20-60%, such as 22-50%. The moisture content of raw brewer's spent grain is typically about 80%.

In a further embodiment of the present invention, the brewer's spent grain is in a dried form, preferably a powder or granulate, for example a dried solid fraction of brewer's spent grain. However, how the brewer's spent grain is dried should not be a limitation of the present invention. The brewer's spent grain, such as a solid fraction of BSG, could be dried by any method known in the art, such as spray drying, freeze drying, fluid-bed drying or infrared drying. In a further embodiment of the invention, the solid fraction of brewer's spent grain is dried and grounded.

### The method of the invention:

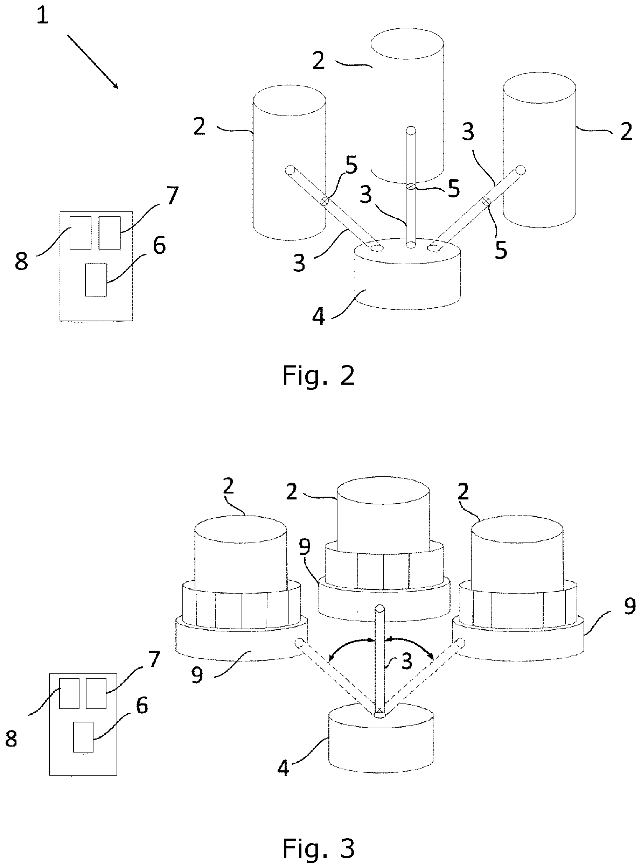

With reference to figure 2, which schematically shows the the technical features relevant for the method of preparing a mixture of brewer's spent grain having a composition corresponding to a requested user input. Figure 2 shows as an example the technical features provided in the method of the invention. The invention should not be limited to the embodiment shown in figure 2.

The method of the invention is a method of preparing a mixture of brewer's spent grains according to claim 1. The amounts of the individually BSGs to be delivered to prepare the mixture of BSG are metered or weighed so that they provide a uniform mixture of brewer's spent grain corresponding to a user input.

The method provides a plurality of receptacles 2, each receptacle 2 comprising a brewer's spent grain. The receptacles 2 is to be understood broadly and to cover all types of receptacles suitable to store a BSG. The receptacle may hence both cover all kinds of containers or cover pipes for storing and transporting BSG. However, in an embodiment, the receptacle is selected from the group of a silo, a container, a pouch, a sack, a bag, a pipe, a basket, a kettle or the like. In an embodiment, the receptacle is a silo. In another embodiment, the receptacle is a bag or sack.

The brewer's spent grain in the receptacles 2 independently of each other comprises: one or more nutrients, a flavour and a colour.

The method also provides a database 7 storing information of the content of nutrients, flavour and colour of the brewer's spent grains present in the receptacles 2. In addition, the method provides input means (8) adapted to retrieve an input from a user of a mixture of brewer's spent grain to be obtained by the method.

The method further provides one or more delivery devices 3, each delivery device comprising a metering device 5 or weighting cells, and said delivery devices 5 are adapted to deliver from the receptacles 2 a metered or weighed amount of the brewer's spent grain in the receptacle 2 to a container 4, to form a mixture of brewer's spent grain.

Although the embodiment shown in figure 2 provides a delivery device 3 for each receptacle 2, a single delivery device 3 may be applied, in which cases the single delivery device 3 is adapted to alternately (in turn) connect to a single receptacle 2. An embodiment of one such single delivery device is shown in figure 3. The implementation of such single delivery device connecting to several receptacles could be a delivery device that is movable connected to one receptacle at the time before moving on to the next receptacle, for example as a carousel. The carousel is rotable, in a controlled manner, so that the delivery device 3 may be placed by rotation of the carrousel below an opening of a selected receptacle 2.

The method also provides a controller 6 being adapted to retrieve from the database 7 information of the content of nutrients, flavour and colour in the brewer's spent grain present in the receptacles 2 and retrieve data of the user input from the input means.

Once the delivery device is placed below the opening of a selected receptacle, the controller 6 controls a shut-off valve regulating the flow out of the receptacle to open so that the brewer's spent grain is dosed into the delivery device. The flow of brewer's spent grain out of the receptacle 2 may be provided by the gravity optionally assisted by vibrating the receptacle 2 to loosen up the brewer's spent grain in the receptacle and ease the flow out of the receptacle. The flow of the brewer's spent grain out of the receptacle 2 may in an embodiment also be assisted by an extruder. The amount of brewer's spent grain may be determined by the opening-time of a shut-off valve and/or a weighting cell arranged to weight the container 4 and its content. The delivery device 3 may also be a single delivery device that is manually moved from one receptacle to the next receptacle to receive the brewer's spent grain delivered corresponding to the user input.

The method according to the present invention should not be limited to any specific design of the delivery device, and the delivery device can therefore take any form. The function of the delivery device is that the delivery device 3 deliver the metered or weighed amounts of brewer's spent grain from the receptacle 2 to the container 4. In the preferred embodiments of fig. 2, the delivery devices 3 comprise a pipe which open into the receptacle 2 at one distal end to receive the brewer's spent grain in the receptacle 2 and the other distal end opens into the container 4. In an embodiment of the system useful for understanding the invention, the distal end could open into a funnel shaped collector placed above container 2. The funnel shaped collector may comprise a lid to avoid entrainments of pollutions.

As shown in figure 3, the one or more delivery devices 3 provided may comprise a socklet 9 into which a receptacle 2 fits in the sealed engagement. The socklet 9 typically comprises a sharp element (not shown) which breaks open the seal of the receptacle when the receptacle is arranged in the socklet 9. The delivery device 3 further comprises a tube or pipe which opens into the socklet at one distal end to receive the brewer's spent grain in the receptacle 2 and the other distal end opens into a container 4.

The one or more delivery devices 3 provided may preferably comprise a metering device 5 in the form of a metering pump for metering of brewer's spent grain. The metering device may for example be selected from the group of a screw feeder, an extruder, a gas driven fluidifier, typically metering a substance. Other metering devices 5 applicable in connection with the present invention include a device for measuring the volume, typically for metering liquid substances.

The device for measuring the volume is particularly relevant in the embodiment of the invention where the mixture of brewer's spent grain obtained by the method is a mixture of liquid fractions of brewer's spent grain.

As an alternative to the metering devices 5 arranged in the delivery devices 3, weighting cells may be arranged to weight one or more of the plurality of receptacles 2 or weight the container 4. The decrease in weight of the receptacle 2 or the increase in weight of the container 4 may be used to determine the amount of brewer's spent grain delivered from a receptacle 2. Such weighting cells may also be used in combination with the metering devices 5 to verify the amounts and/or to maintain a record on the amount of brewer's spent grain present in the receptacle 2, the latter can be used to signal that the receptacle is empty or nearly empty and needs replacement.

Often the brewer's spent grains being delivered from the receptacle 2 to the container 4 need to be stirred. In an embodiment useful for understanding the invention, the system 1 therefore comprises a stirring device for stirring the brewer's spent grains delivered. Such a stirring device may be a stirrer applied to operate e.g. in the container 4, so that the brewer's spent grains are stirred when delivered from the receptacles 2. The stirring device may also be in the funnel shaped collector, however, this requires that the brewer's spent grains are delivered from the receptacle 2 to the funnel shaped collector at the same time which may not always be the case. If the brewer's spent grains are delivered sequentially, the stirring device may be a vibrator vibrating the container 4 or be a stirrer placed in the container. Alternatively, the stirring device may be a screwextruder, such as a twin-screw extruder placed in the container.

The method also provides input means 8, such as a graphical user interface, adapted to receive an input from a user relating to characteristic of a mixture of brewer's spent grain wished obtained. According to the invention, the input from the user is one or more selected from the following groups of inputs: a requested colour, a requested flavour, a requested nutrient content, and may vary dependent on the needs. The input of the user that determine the amounts of brewer's spent grains delivered from the receptacles 2 may for example relate to the content of one or more nutrients wished present in the mixture of brewer's spent grain, such as a specific protein content of the mixture of brewer's spent grain obtained, the fibre content, the allergen content, or antioxidant content of the mixture of brewer's spent grain to be obtained. Alternatively, the user input could be relating to the colour or the flavour of the mixture of brewer's spent grain wished obtained. In embodiments useful for understanding the invention, the user input may also be relating to the volume, moisture content or particle size of the output.

Hence, the requested user input is selected from the group consisting of a requested colour, a requested flavour (taste and/or smell) and/or a requested nutrient content. In embodiments useful for understanding the invention, the user input could be requested volume, or a requested moisture content.

The requested nutrient content may for example be one or more of a requested protein content, a requested carbohydrate content, a requested lipid content, a requested fibre content, a requested allergen content, a requested antioxidant content and a requested content of essential amino acids.

In an embodiment of of the invention, the method delivers metered or weighed amounts of two or more brewer's spent grains from receptacles 2 to prepare a mixture of brewer's spent grain. Preferably, the two or more brewer's spent grains are derived from at least two different raw brewer's spent grains. Further, the brewer's spent grains in the receptacles 2 are preferably selected from the group of solid fractions of brewer's spent grains and liquid fractions of brewer's spent grains. Preferably, the solid fractions of brewer's spent grain and/or liquid fractions of brewer's spent grain are derived from at least two different raw brewer's spent grains.

The user input may also be relating to the flavour of the mixture of brewer's spent grain wished obtained, for example aroma compounds and/or taste substances. The requested user input may therefore be a user input relating to a requested flavour, for example a flavour selected from the group of neutral flavour, caramel, chocolate, coffee, sour, fresh, barley, bread, kokumi, cereal, fad, citrus, mild, granary, mild grean (cucumber), cream, honey, biscuit, marmalade, malty-sweat, toffee, sweet, bitter, cacao, roasted almond, fruity, mild fruity (e.g. abricot), hay, bready, wood smoke, smoked, clove, hazelnut, raisin, vanilla, mint, cocoa, almond, ethanol, benzene, wild radish, cabage, cheese, green cheese, blue cheese, oily, burned, green grass, sharp aldehyde, harsh, and fusel. In a preferred embodiment, the flavour is selected from the group of neutral flavour, caramel flavour, chocolate flavour, coffee flavour, sour flavour, and fresh flavour.

Some flavours may be perceived as having a bad flavour. Therefore, a user input could be that some flavours should be in the mixture or brewer's spent grain in a low amount. The flavours that may be perceived as having a bad flavour is ethanol, benzene, wild radish, cabage, cheese, oily, burned, green grass, sharp aldehyde, harsh, and fusel.

A certain flavour in a BSG can be detected by measuring aroma compounds or by sensoric analysis.

For example, a brewer's spent grain having a caramel flavour is characterised by having a high content of 2,3-butanedione, since 2,3-butanedione is characterised by having a buttery, creamy, sweet caramelic flavour (aroma). In the context of the present invention, the term "caramel flavour" of a mixture of brewer's spent grain can for example be defined by the mixture comprising 2,3-butanedione in an amount of at least 1.5% area units of the total area units detected in GC-MS analysis. The term "percentage area unit" is a widely used standardized semi-quantitative measure in chromatography and therefore corresponds to what the skilled person would normally understand by the term. Hence, the term "percentage area unit" from GC-MS is the area under a peak expressed as the percentage of the total area of all peaks in a GC-MS chromatogram.

In an embodiment of the invention the user input relates to a requested caramel flavour. Caramel flavour would be understood as a high amount of 2,3 butanedione present in a mixture of brewer's spent grain. In an embodiment, the requested user input could be that the content of 2,3 butanedione is at least 1.5% area units of the total area units detected in GC-MS, preferably at least 2% area units of the total area units detected. In a further embodiment of the invention, the user input is that the content of 2,3 butanedione is in the range of from 2% to 5% area units of the total area units detected, preferably from 2% to 4% area units of the total area units detected. In an example of the invention, the user input is that the content of 2,3 butanedione is for example from 2% to 4% area units of the total area units detected, and with a light brown color corresponding to an EBC color from 3 to 5.

Another example of a flavour of a brewer's spent grain is "chocolate flavour". Chocolate flavour is characterised by having a high amount of the compound butanal 2-methyl. If the requested user input is relating to obtaining a chocolate flavour, it corresponds to that the content of butanal 2-methyl is at least 2 % area units of the total area units detected in GC-MS analysis, preferably at least 3% area units of the total area units, such as at least 4% area units of the total area units. In a further embodiment of the invention, the requested user input of chocolate flavour corresponds to that the content of butanal 2-methyl is in the range of from 2 to 14% area units of the total area units, preferably from 3 to 12 % area unit of the total area units.

Other chemical compounds (aldehydes, ketones, acids, alcohols, sulphuric components etc.) measured by GC-MS can be connected to a certain flavour, and the present invention is not limited to the content of any specific chemical compounds. Examples of other compounds that may be detected and connected to a flavour may be, but are not limited to (1R)-2,6,6-Trimethylbicyclo[3.1.1]hept-2-ene; 1-Butanol, 2-methyl-; 1-Butanol, 3-methyl-;1-Heptanol; 1-Hexanol; 1-Pentanol; 1-Propanol; 1-Propanol, 2-methyl-; 2,3-Butanedione; 2-Butanone; 2-Furancarboxaldehyde, 5-methyl-; 2-Hexanone, 4-methyl-; 2-Nonen-1-ol, (E)-2-Octanone; 2-Octen-1-ol, (E)-; 3(2H)-Furanone, dihydro-2-methyl-; 3-Carene; Acetic acid, methyl ester; Acetone; Benzaldehyde; Benzene, (2-methylpropyl)-; Benzene, pentyl-; Benzofuran, 2-methyl-; Butanal; Butanal, 3-methyl-; Butanenitrile, 3-methyl-; Creosol; Dimethyl sulfide; Ethanone, 1-(2-furanyl)-; Ethyl Acetate; Furan, 2,5-dimethyl-; Furan, 2-methyl-; Furan, 2-pentyl-; Furfural; Heptanal; Hexanal; Hexanenitrile; Isopropyl Alcohol; Pentanal; Propanal, 2-methyl-; Pyrazine, ethyl-; Pyrazine, methyl-; Pyridine; Thiophene; 2-Butanone; Isopropyl Alcohol; 2,3-Pentanedione; Bicyclo[3.1.1]heptane, 6,6-dimethyl-2-methylene-, (1S)-; Bicyclo[3.1.1]heptane, 6,6-dimethyl-2-methylene-, (1S)-; Cyclopropaneethanol; D-Limonene; 2-Nonenal, (E)-; o-Cymene; Cyclohexene, 1-methyl-4-(1-methylethylidene)-; Acetoin; 2-Propanone, 1-hydroxy-; Cyclopropaneethanol; Tetradecane; 3-Octen-2-one, (E)-; 2,4-Heptadienal, (E,E)-; 1-Hexanol, 2-ethyl-; 2,4-Heptadienal, (E,E)-; 3,5-Octadien-2-one, (E,E)-; Camphene; Paromomycin; Butyrolactone; Acetophenone; 2-Furanmethanol; Benzyl alcohol.

The content of the chemical compounds that are connected to certain flavours is in the context of the present invention measured by use of Gas Chromatography-Mass Spectrometry (GC-MS), but it may be measured by use of other methods. GC-MS is an analytical method that combines the features of gas-chromatography and mass spectrometry to identify different substances within a test sample. The GC-MS used for measuring the content of flavour compounds in the context of the present invention was: GC-MS, 7890A GC-system interfaced with a 5975C VL MSD with Triple-Axis detector from Agilent Technologies, Palo Alto, California.

The flavour in a BSG may besides from being measured by using information of specific compounds in a GC-MS also be measured by sensoric analysis. For example, a brewer's spent grain characterized by having a sour flavour or a fresh flavour can be shown by sensoric analysis using a sensory panel. Furthermore, the aroma of BSG may be determined by using "The Weyermann^{®} Malt Aroma Wheel@" categorising the aroma of the malt used for preparing the BSG. The Weyermann^{®} Malt Aroma Wheel^{®} categorises all malts with regard to the aroma. In the context of the present invention, a flavour indicator is used for describing a flavour of a BSG. The flavour indicator of a BSG is a weighted average based on Weyermann^{®} Malt Aroma Wheel@. For example, if a BSG is made from using 30% of malt A having a flavour according to Weyermann of 0.49, 30% of malt B having a flavour according to Weyermann of 0.52 and 40% of a malt C having a flavour according to Weyermann of 0.62, the flavour indicator (weighted average) of the BSG is 0.55. The higher the number of the flavour indicator is, the more intense is the flavour of the BSG.

Determining a flavour by using GC-MS or a flavour indicator based on Weyermann^{®} Malt Aroma Wheel@ is not to be seen as a limitation of the present invention and is merely different methods of determining the flavour. Besides, there will be a correlation between the flavour determined by GC-MS and the flavour indicator based on Weyermann^{®} Malt Aroma Wheel@.

The colour of a brewer's spent grain varies from very light to dark brown and may be measured by different methods. One example of measuring colour of a BSG is by using the colour unit EBC (European Brewery Convention). EBC refers to the colour of a beer measured in a technical manner. The EBC method is quantitative and involves measuring the colour of a sample (diluted BSG) in a cuvette that is placed in a spectrophotometer at a wavelength of 430 nm. The EBC colour is determined by: EBC=25×D×A430, where D is the dilution factor of the sample and A430 is the light absorbance at 430 nanometers in a 1 cm cuvette.

A BSG with a light colour will have an EBC in the range of zero to 20, where a very light colour will have a EBC below 5, such as 3-5. A BSG with a dark colour will have a BSG in the range above 50 EBC. Hence, a requested user input could be a certain colour (dark/light) or a range of a colour measured by EBC. Hence, in an embodiment of the invention, the requested user input is a requested EBC colour. For example, a user input could be relating an EBC colour of 3 to 7 (light colour) or an EBC colour of 16 to 24 (medium brown colour) or 57 to 63 (dark brown colour) or or an EBC colour of above 100 (very dark colour). The colour may also be measured by other methods, such as the Natural Color System (NCS), the Sikkens color coding, or the RAL colour system (Reichsausschuß für Leiferbedingungen).

In embodiments useful for understanding the invention, the requested user input may also comprise a volume of the output mixture of brewer's spent grain to be obtained. If a certain volume is input by the user, the amounts of brewer's spent grain delivered from the receptacles (2) are determined according to the desired volume of the final mixture of brewer's spent grain.

Hence, the amounts of brewer's spent grain to be delivered from the receptacles 2 are determined based on the user input and the content of nutrients, flavour and/or colour of the brewer's spent grains in the receptacles 2. The brewer's spent grains in the receptacles 2 are typically analysed for their nutrient content, flavour (taste and smell) and the colour. Based on the known content of nutrients, flavour and colour of the brewer's spent grains in the receptacles and the requested user input, the amount of brewer's spent grain delivered from the individually receptacles 2 can be determined.

The method also provides a controller. The controller 6 is adapted to retrieve from the database 7 information of the content of nutrients, flavour and colour in the brewer's spent grain present in the receptacles 2 and retrieve data of the user input from the input means 8. The controller 6 determines the amount of each of the brewer's spent grain to be delivered from the receptacle 2 to the container 4. Further, the controller 6 is being adapted to control the one or more delivery devices 3 to deliver individually into the container 4 the metered or weighed amount of brewer's spent grain determined by the controller to be delivered from a receptacle 2 to the container 4. Thus, once the actual amounts of brewer's spent grain to be delivered are determined, the controller 6 controls the action of the delivery devices, such that these amounts are moved from the receptacles 2 into the container 4. The delivery device may for example include a metering device 5 that controls the amount delivered by the delivery device.

The method 1 further provides or has access to a database 7 storing values of the content of nutrients, flavour (for example the content of flavour compounds) and colour of the brewer's spent grain in the receptacle 2. The database may for example be a spreadsheet. The determination of the actual amounts to be delivered from the receptacles 2 is carried out by the controller 6, and includes that the controller 6 is adapted by suitable software instructions to retrieve from the database 7 the amount of nutrients, colour and flavour in a brewer's spent grain. Once the amounts of nutrients, colour and flavour in a brewer's spent grain are known by the controller 6, the controller determines the amounts of brewer's spent grain to be delivered from the receptacles 2 corresponding to user input. The data can be stored in a memory of the controller or may be stored in a remote server accessible via a communication network. In case of a remote data retrieving system, the method provides a communication module (e.g. wifi, modem, Ethernet or like) enabling it to exchange data with the external network. The controller 6 is a programmable processor cooperating with a memory storing data and instructions. In an embodiment of the invention, the processor comprises an algorithm for calculating the amounts of brewer's spent grain to be delivered from the receptacle 2 based in the input from a user.

The method of the invention may be characterised as a computer implemented method. As discussed earlier, the input by the user may be relating to the flavour or colour of the mixture of brewer's spent grain to be obtained. For example, a user input of a mixture of brewer's spent grains wished obtained could be any of the following:
- a fresh and sour flavour, or
- a chocolate flavour
- a caramel flavour
- a coffee flavour
- a neutral flavour

In such case, the controller translate the user input to the flavour compounds characterizing for the flavour, e.g. by consulting a database storing values of flavour compounds of the different brewer's spent grains in the receptacles 2 or by consulting a database storing information of the flavour based on Weyermann's aroma wheel of the malts used in brewing the BSG. Similarly, the controller translates the user input of for example the colour, light or dark colour, to a required colour scale (for example by using the EBC colour scaling, Sikkens colour coding or another colour scaling method), e.g. by consulting a database storing values of the colour scale of the different brewer's spent grains in the receptacles 2.

In an embodiment useful for understanding the invention, machine learning is implemented such that the system may learn that for example a given colour responds to given contents of nutrients. The machine learning may be implemented by use of an Artificial Intelligence Engine (AIE), such as, but not limited to, Microsoft Cognitive Toolkit (CNTK) or the like, cloud solution such as Azure Machine Learning or the like, or a combination of the two. In such and other embodiments, the AIE is initially trained based on the information of content of nutrients, colour and flavour of a pluralities of brewer's spent grains. Thus, the AIE is trained to recognize with a certain statistical accuracy for example the nutrient content based on the colour of a BSG. However unsupervised learning can also be employed. The system could for example be trained in that there is a correlation between the colour and the nutrient content of a BSG. For example, the system could be learned that a dark colour corresponds to a low fiber and protein content, but a high content of carbohydrates. Also, the system could be trained in that a light brown colour corresponds to a high protein and fiber content. The system could be trained in other ways, such as for example trained in recognizing the colour, flavour, nutrients or combinations hereof, etc. of a BSG obtained from brewing a certain beer (using same malt) and obtained from a certain brewery.

Based on the user input, the controller 6 makes a determination step from the data base resulting in that mixture of brewer's spent grain for example should comprise:
Brewer's spent grain A in an amount of 20% by weight
Brewer's spent grain B in an amount of 75% by weight
Brewer's spent grain C in an amount of 5% by weight

When these values have been determined, the delivery devices 3, for example with use of the metering devices 5 or weigting cells, are controlled so that these amounts are delivered from the receptacles 2.

In an embodiment, the method further provides or has access to an analyser for analyzing the content of nutrients, flavour and/or colour of a brewer's spent grain or is adapted to receive values for amounts of nutrients, flavour and colour. An analyser may also analyzing the moisture content or particle size of a BSG being in solid form, for example a flour of BSG. The analyser may be one analysr suitable for analysing various parameters or may be several analysers each analysing a parameter (by parameter is to be understood nutritents, flavour and colour).

The brewer's spent grain may be analysed for the following:
- flavour (both aroma and taste) by sensory, GCMS or by use of Weyermann's Malt Aroma coding
- the colour (very light, light, dark, very dark)
- the nutrient content
- the moisture content
- particle size

The particle size of a solid and grinded brewer's spent grain may vary, for example dependent of which type of beer/whiskey is brewed. Different particle sizes of a solid, grinded BSG (a BSG flour) results in different functionalities of the flour. Hence, it may be an important parameter to obtain a mixture of BSG flour having a particle size that results in desired functional properties.

The method according to the present invention may also provide a database storing incompability data. The incompability data could be of nutrients, flavour and colour of the one or more brewer's spent grain in the receptacles 2. For example, a dark BSG would have a low content of fibre, protein and lipid. Hence, a user input relating to a mixture of brewer's spent grain being dark and have a high fibre content would not be possible.

Further, some types of BSGs are not suitable for being used in preparing some types of mixtures of BSGs. For example, if the user input requests a mixture of BSG that is light brown and has neutral flavour, some types of BSG should never be used in preparing the mixture or BSG because of their strong flavours that would not be suitable for neutral flavour. The database storing incompability data will store data relating to that some BSG's are not suitable for preparing some types of mixtures.

In an embodiment of the invention, the system further comprises sanitization means for sanitization of the system. The sanitization means may for example be providing irradiation, a sanitization fluid, steam or hot water, wet blasting, dry blasting or other sanitization means, such that sterile conditions are provided.

A suitable dry blasting may for example be dry ice blasting.

### Mixture of brewer's spent grain:

In an aspect useful for understanding the present invention a mixture of brewer's spent grain is provided for use in a food product, wherein the mixture comprises two or more brewer's spent grains derived from at least two different raw brewer's spent grains.

As earlier discussed, raw BSG obtained from different breweries or from production of different different types of beer or whiskey have different nutrient content, colour and flavour. Therefore, products comprising BSG are today only prepared using BSG derived from one raw BSG. However, the inventors of the present invention have now surprisingly found a way of preparing mixtures of BSG that are uniform in nutrient content, flavour and colour from mixing two or more BSGs from different sources of raw BSG. Hence, the method of the present invention allows preparing mixtures of BSG derived from two or more raw BSGs.

In an embodiment useful for understanding the invention, the mixture of brewer's spent grain comprises brewer's spent grains selected from the group of solid fractions of brewer's spent grains and liquid fractions of brewer's spent grains.

### Use (not encompassed by the wording of the claims)

The mixture of brewer's spent grain may for example be used for preparing an ingredient for use in the food industry. The ingredient could for example be a flour used in the bakery industry, but the ingredient may also be used in other food industries. The mixture of BSG obtained by the method of the invention may also in an embodiment be used in preparing beverages.

A flour prepared from brewer's spent grain may in principle be used for any food product. The flour from BSG is particularly useful for bakery products where an increased protein and/or fibre content is wished obtained. For example, flour prepared from brewer's spent grain may be used in preparing dough for, for example, bread, pizza, pita, pastry, pancakes, crepes, waffles. A bread made from a BSG flour will besides from having an improved flavour also have an improved texture as compared to using conventional wheat flour. Further, a bread made from BSG flour will be able to maintain moisture for a longer time than breads made with wheat flour.

The mixture of brewer's spent grain could also be used as a filler or texturizing agent in food products. For example, the mixture of brewer's spent grain could be used as a filler or texturizing agent in meat produces (i.e. sausages, pate), sauces, gravies, sausages, snacks, crisps, and pasta. It is also possible to use the mixture of BSG for making plantbased food products, such as plant-based meat-alternative products. Further, the mixture of brewer's spent grain, in particular when being in liquid form, may be used in the preparation of a beverage, a liquid breakfast, a porridge, a dessert, a yoghurt, a sauce and a soup.

The beverage may for example be selected from the group of smoothie, shake, juice, chocolate milk, plant based milk, shot, cereal milk or ice-tea like drink, but the present invention should not be imited to any of these types of beverages. In an example, the beverage is a ginger shot made of a mixture of brewer's spent grain and ginger. The dessert may for example be any of puddings, fromages, mousse, ice cream, sherbets, sorbets, ice milks, ice water and the like.

The invention will now be described in further details in the following non-limiting examples.

### Examples

### Example 1 - correlation between colour and nutrient content in Brewer's spent grain

The correlation between the color and nutrient content of different brewer's spent grains was analysed. This analysis was performed in order to find out how different brewer's spent grains can be mixed when wished to obtain a mixture of brewer's spent grain having specific characteristic.

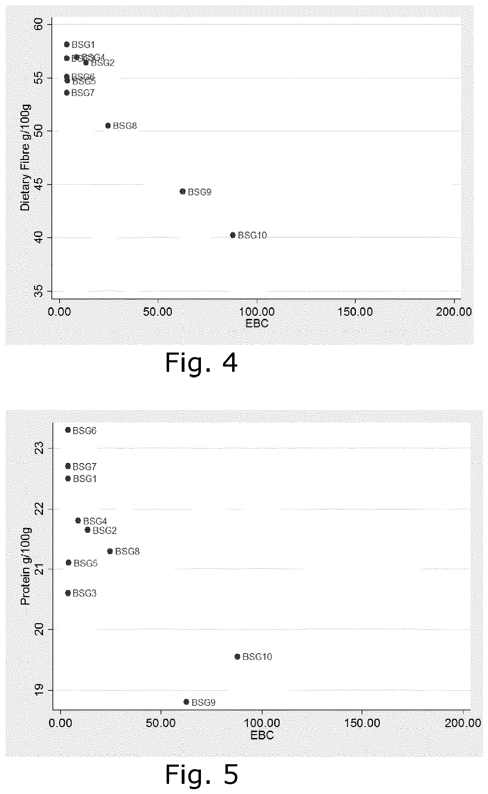

10 different brewer's spent grains were analysed by measuring the color (the colour was measured by using the EBC color scale), protein content, fiber content, fat content and carbohydrate content. The data measured is shown in figures 4 to 7 showing the correlation between the color (EBC ) and the nutrients, protein, fiber, carbohydrate and fat.

The EBC color is a measurement of how light/dark a brewer's spent grain is. The higher the value measured, the darker is the color. The EBC color was determined by using the EBC colour scale of the malt used in brewing beer.

The fat content was measured by NMR by the company ALS Global that provides analyses of nutrients.

The protein content was measured by the method Dumas Levco Nitrogen by the company ALS Global.

The carbohydrate content was measured by use of the Council Directive 90/496//EEC by the company ALS Global.

The 10 different brewer's spent grains analysed were dried and grinded solid fractions of brewer's spent grains from the production of different types of beer and received from different breweries. The 10 different brewer's spent grains are termed as BSG1, BSG2, BSG3, BSG4, BSG5, BSG6, BSG7, BSG8, BSG9 and BSG10. The solid and grinded smaples of BSG was before analysis diluted in water.

Figure 4 shows the correlation between the EBC colour (darkness) and fibre content of different brewer's spent grains shown. It is observed that the higher the EBC colour (darker) of the brewer's spent grain is, the lower is the fibre content.

Figure 5 shows the correlation between the protein content and EBC colour (darkness) of the same 10 brewer's spent grains as shown in figure 4. It is observed that the the higher the EBC colour (darker) of the brewer's spent grain is, the lower is the protein content.

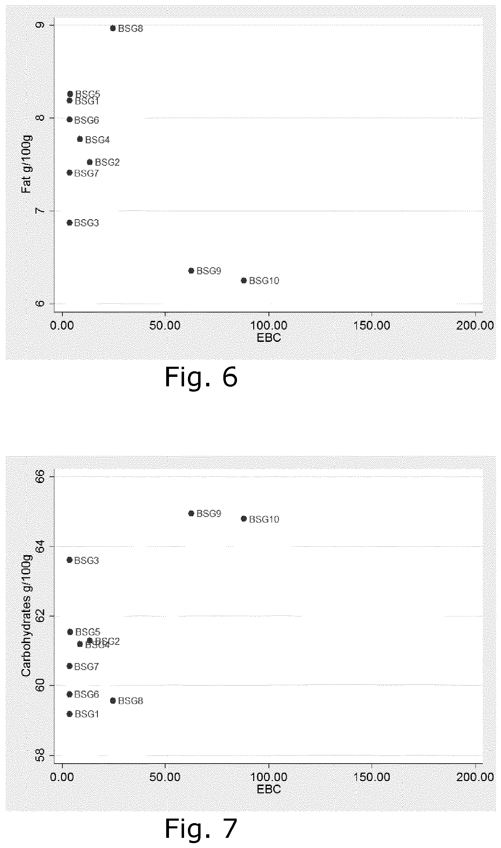

Figure 6 shows the correlation between the fat (lipid) content and EBC colour (darkness) of the same 10 brewer's spent grain. It is observed that the higher the EBC colour (darker) of the brewer's spent grain is, the lower is the fat content. However, figure 6 also shows that brewer's spent grain from production of some types of beer may have a very high fat content, while having a higher EBC colour (darker) than other types of brewer's spent grains that have have a lower fat content.

Figure 7 shows the correlation between the carbohydrate content and EBC colour (darkness) of the same 10 brewer's spent grains. However, figure 7 shows that that the higher the EBC colour the the brewer's spent grain is, the higher is the carbohydrate content.

### Example 2 - correlation between colour and flavour compounds in Brewer's spent grain

Brewer's spent grains obtained from production of different types of beer or distillation of for example whiskey may also have different flavour and hence different amounts of different flavour compounds. The flavour compound 2,3-butanedione is for example correlated to a caramel flavour and butanal, 2-methyl is correlated to chocolate flavour.

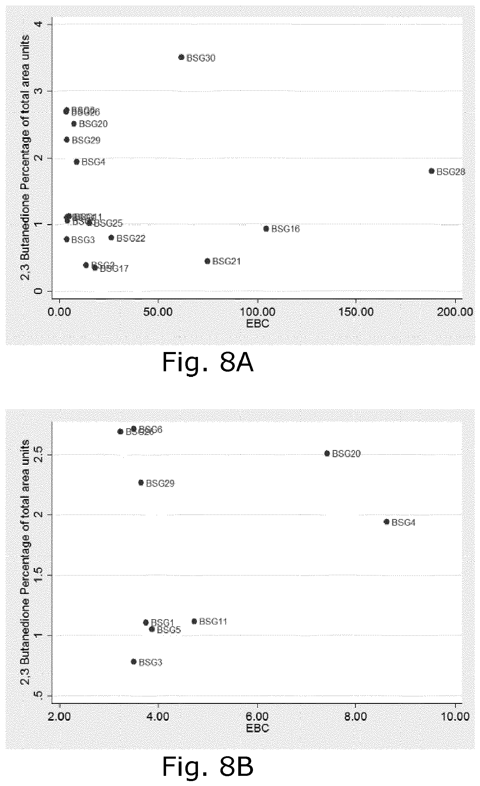

In figure 8A and 8B is the correlation between the content of 2,3-butanedione (caramellic) and the colour (EBC) shown for various brewer's spent grains. The brewer's spent grains analysed are dried and grounded solid fractions of brewer's spent grains and are the same as in example 1.

Figure 8A and 8B furthermore shows which brewer's spent grains would be suitable to use in a mixture of brewer's spent grains if the user input is relating to obtaining a caramellic flavour having a light colour, such as a colour having an EBC colour below 5. Figure 8B is the selection of figure 8A with EBC colour below 10. The database would comprise information of incompability data, such that the system would know that if the input from a user is relating to a mixture of brewer's spent grain having a caramellic flavour and being light in colour (below EBC 5), the brewer's spent grain BSG29, BSG26, and BSG06 should be delivered as they have +2% concentration of caramellic flavour, BSG30 (see 8A) also has more than 2% concentration of caramellic flavour however this BSG has >50 in EBC, therefore very dark in the color and not applicable in respect to the user input.

An example of mixture of brewer's spent grain having a caramellic flavour and having a light colour has the nutrient content per 100 g mentioned in table 1.

**Table 1:**

| | |
|---|---|
| Energy | 1212 KJ |
| | 294 kcal |
| Fat | 8.4 g |
| - saturated fatty acids | 2.2 g |
| Carbohydrates | 6.1 g |
| - sugar | 0.7 g |
| Dietary fibres | 53.6 g |
| Protein | 21.7 g |
| Salt | 0.08 g |

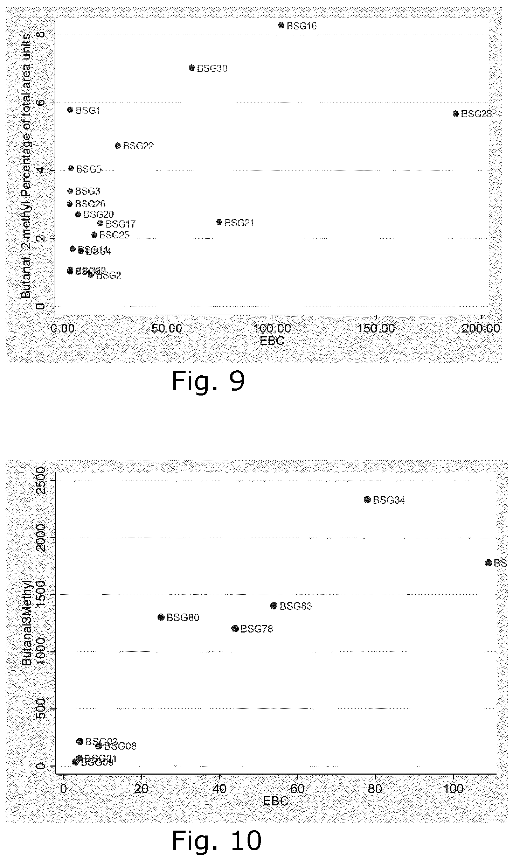

In figure 9 is the correlation between the content of Butanal, 2-methyl (chocolate) and the colour (EBC) shown for various brewer's spent grains. The brewer's spent grains analysed are dried and grounded solid fractions of brewer's spent grains.

Figure 9 furthermore shows which brewer's spent grains would be suitable to use in a mixture of brewer's spent grains if the user input is relating to obtaining a chocolate flavour having a Butanal 2-methyl concentration of 6% and a medium dark colour, such as a colour having an EBC colour of approx. 80. The database would comprise information of incompability data, such that the system that may be used in the method would know that if the input from a user is relating to a mixture of brewer's spent grain having a coffee and cocoa flavour and being dark colour (below EBC 80), the brewer's spent grain BSG30 and BSG16 could be mixed, while mix between BSG1 and BSG28 could be an alternative combination for achieving the same user input.

An example of mixture of brewer's spent grain (solid fraction) having a chocolate flavour has the nutrient content per 100 g given in table 2:

**Table 2:**

| | |
|---|---|
| Energy | 1274 KJ |
| | 307 kcal |
| Fat | 6.4 g |
| - saturated fatty acids | 1.7 g |
| Carbohydrates | 21.8 g |
| - sugar | 4.0 g |
| Dietary fibres | 42.7 g |
| Protein | 19.1 g |
| Salt | 0.01 g |

Figure 10 shows a plot of different liquid fractions of brewer's spent with regard to the content of butanal-3 methyl (chocolate, nutty, leafy, cocoa flavour) and the colour (EBC). Figure 10 shows that there is a correlation between the colour (EBC) of BSGs and the chocolate flavour (measured by the butanal-3-methyl content). Hence, a BSG having a very dark colour (EBC) also has a high content of butanal-3-methyl.

### Example 3 - Sensoric evaluation of different brewer's spent grain.

Sensoric evaluation of the taste and aroma was made of different brewer's spent grains. The brewer's spent grains analysed are dried and grounded solid fractions of brewer's spent grains. A test panel of 6 persons were used. The test persons have been trained and the samples were given randomly to the testpanel.

From the sensoric evaluation, the information given in table 3 was observed.

**Table 3:**

| Brewer's spent grain | Description of taste | Description of aroma | Description of colour (Sikkens colour coding) |
|---|---|---|---|
| BSG 5 | Sour, a little lemon taste at the beginning, but then becomes mild, slightly bitter with sweet aftertaste. Slightly fruity, citrus and lemon | Vegetable oil, cerealic, flaxseed, slightly sour and fruity | Light Portobello (E8.15.65), with yellowish hue |
| BSG6 | Sweet, sour, fresh and intense taste, slightly caramellic and slightly taste of toasted bread | Mild, cerealic, slightly green (cucumber), slightly caramellic/butterscotch and slightly bisquit | Light Portobello (E8.15.65), with yellowish hue |
| BSG8 | Fatty, nutty, mild, bread, full-bodied, kokumi, slightly sour, and slightly bitter aftertaste | Dry/dusty, mild, cerealic, barley, bread, toasted, lishtly chocolate | Brown mushroom (E8.25.55) with reddish/golden hue |
| BSG4 | Sour, fresh, lemon/citrus, sour fruity, fat, flaxseed | Cerealic, flaxseed, slightly creamy, slightly mild fruit | Light brown (E8-20.60) with yellowish hue |

### Example 4 - Preparing mixtures of brewer's spent grains corresponding to specific user input requesting a light brown, neutral taste and high protein content

This examples shows how three different mixtures of BSG can be prepared from different BSG's to obtain a mixture of BSG having a light brown colour, a neutral taste and a high protein content.

The requested user input is:
- A flavour indicator of 0.55 that is a neutral flavour (including a variation of 10%)
- EBC colour of 5-7 that is a very light brown colour
- A protein content of 21g/100g (including a variation of 5%, i.e. 20-22g/100g)

The EBC color is a measurement of how light/dark a brewer's spent grain is. The higher the value measured, the darker is the color. The EBC color was determined by using the EBC colour scale of the malt used in brewing beer.

The protein content was measured by the method Dumas Levco Nitrogen by the company ALS Global.

The flavour indicator is based on a weighted average of the flavour of the malts used in the BSG using the Weyermann^{®} Malt Aroma Wheel@. A neutral taste is having a flavour indicator of 0.55 (±10%)

8 different types of BSG is provided (see table 4), each having a protein content, an EBC colour and a flavour measured by using the flavour indicator.

**Table 4:**

| Brewer' spent grain | Protein (g/100g) | EBC colour | Flavour indicator |
|---|---|---|---|
| BSG31 | 21.25 | 3.5 | 0.53 |
| BSG32 | 23.92 | 3.5 | 0.53 |
| BSG33 | 22.54 | 3.75 | 0.53 |
| BSG34 | 21.45 | 3.87 | 0.54 |
| BSG35 | 22.43 | 8.62 | 0.63 |
| BSG36 | 17.01 | 9.0 | 0.55 |
| BSG37 | 17.04 | 12.0 | 0.57 |
| BSG38 | 22.39 | 13.48 | 0.59 |

The 8 different BSGs can be mixed in multiple combinations leading to the requested user input. Below are three examples given where the percentages of the different BSGs results in a mixture of BSG that has the criteria of the requested user input. The amounts mixed (weight/volume) is dependent of the requested amount of mixture wished obtained.

**Mixture 1 using three different BSGs:** 70%-wt BSG31, 15%-wt BSG35, 15%-wt BSG38. This mixture of BSGs results in a mixture having a flavour indicator of 0.55, an EBC colour of 5.8 and a protein content of 21.6 g/100g.

**Mixture 2 using three diffent BSGs:** 40%-wt BSG32, 40%-wt BSG34, and 20%-wt BSG37. This mixture of BSGs results in a mixture having a flavour indicator of 0.54, an EBC colour of 5.3 and a protein content of 21.5 g/100g.

**Mixture 3 using four diffent BSGs:** 50%-wt BSG33, 10%-wt BSG34, 20%-wt BSG36 and 20%-wt BSG38. This mixture of BSGs results in a mixture having a flavour indicator of 0.55, an EBC colour of 6.7 and a protein content of 21.3 g/100g.

### Example 5 - Preparing mixtures of brewer's spent grains corresponding to specific user input

This example shows how a mixture of BSG can be prepared from different BSG's to obtain a mixture of BSG having a
i) a medium brown colour, a high protein content and a high fibre content.
ii) a dark brown colour, a high protein content and a high fibre content The example also shows three different combinations of BSGs that lead to each of the mixtures i) and ii).

The requested user input for the mixture i) is:
- EBC colour of 20 that is a medium brown colour (a variation of 20% is accepted, i.e. an EBC of 16-24 is accepted)
- A protein content of 18.5g/100g (including a variation of 5%, i.e. 17.8-19.4g/100g)
- A fibre content of 61g/100g ((including a variation of 5%, i.e. 58-64g/100g)

The requested user input for mixture ii) is:
- EBC colour code of 60 that is a dark brown colour (a variation of 10% is accepted, i.e. an EBC of 54-66 is accepted)
- A protein content of 19/100g (including a variation of 5%, i.e. 18-20g/100g)
- A fibre content of 57g/100g (including a variation of 5%, i.e. 54-60g/100g)

The EBC color and protein content was measured as mentioned in example 4 and the fibre content was measured using the AOAC method 985.29
13 different types of BSG is provided (see table 5), each having a fibre content, a protein content, and an EBC colour.

**Table 5:**

| Brewer' spent grain | Protein (g/100g) | EBC colour | Fibre (g/100g) |
|---|---|---|---|
| BSG33 | 22.55 | 3.75 | 58.22 |
| BSG34 | 21.46 | 3.87 | 55.63 |
| BSG35 | 22.43 | 8.62 | 58.55 |
| BSG36 | 17.02 | 9.0 | 65.69 |
| BSG37 | 17.05 | 12.0 | 62.05 |
| BSG38 | 22.40 | 13.48 | 61.04 |
| BSG39 | 21.39 | 24.57 | 50.70 |
| BSG40 | 17.72 | 25 | 61.20 |
| BSG41 | 14.22 | 28 | 56.27 |
| BSG42 | 18.79 | 33 | 61.45 |
| BSG43 | 16.73 | 33 | 57.98 |
| BSG44 | 18.72 | 54 | 54.47 |
| BSG45 | 19.23 | 78 | 56.62 |

The 13 different BSGs can be mixed in multiple combinations leading to the requested user input. Below are three examples given that all results in a mixture of BSG has the criteria of the requested user input of the mixture i).

**Mixture 1 using three different BSGs:** 40%-wt BSG37, 30%-wt BSG38, 30%-wt BSG42. This mixture of BSGs results in a mixture having an EBC colour of 18.7, a protein content of 19.2 g/100g, and a fibre content of 61.6g/100g.

**Mixture 2 using four diffent BSGs:** 10%-wt BSG33, 20%-wt BSG37, 30%-wt BSG40 and 30%-wt BSG42. This mixture of BSGs results in a mixture having an EBC colour of 23.4, a protein content of 18.5 g/100g, and a fibre content of 61.2g

**Mixture 3 using two diffent BSGs:** 50%-wt BSG37 and 50%-wt BSG42. This mixture of BSGs results in a mixture having an EBC colour of 22.5, a protein content of 17.9 g/100g and a dietary fibre content of 61.8g/100g.

Below are three examples given that all results in a mixture of BSG has the criteria of the requested user input of the mixture ii).

**Mixture 1 using two different BSGs:** 20%-wt BSG42 and 80%-wt BSG45. This mixture of BSGs results in a mixture having an EBC colour of 64.5, a protein content of 19.1 g/100g, and a fibre content of 58.1g/100g.

**Mixture 2 using three diffent BSGs:** 20%-wt BSG40, 40%-wt BSG44 and 40%-wt BSG45. This mixture of BSGs results in a mixture having an EBC colour of 63.1, a protein content of 18.9 g/100g, and a fibre content of 56.2g

**Mixture 3 using three diffent BSGs:** 20%-wt BSG41, 20%-wt BSG44 and 60% BSG45. This mixture of BSGs results in a mixture having an EBC colour of 63.7, a protein content of 18.1 g/100g and a dietary fibre content of 56.1g/100g.

## Claims

1. A method of preparing a mixture of brewer's spent grain from different compositions of brewer's spent grain having different nutritional composition, flavour and colour, and wherein the mixture of brewer's spent grain is having a composition corresponding to a requested user input, the method comprises;
- providing a plurality of receptacles (2), each receptacle (2) comprises a brewer's spent grain, where the brewer's spent grain comprises independently of each other:
∘ one or more nutrients, a flavour and a colour;
- providing a database (7) storing information of the content of nutrients, flavour and colour of the brewer's spent grains present in the receptacles (2);
- providing input means (8) adapted to receive an input from a user of a mixture of brewer's spent grain to be obtained by the method, wherein the input from a user to the input means (8) is one or more selected from the following groups of inputs: a requested colour, a requested flavour, a requested nutrient content;
- providing one or more delivery devices (3) each comprising a metering device (5) or weighting cells, said delivery devices (3) are adapted to deliver from the receptacles (2) a metered or weighed amount of the brewer's spent grain to a container (4), to form a mixture of brewer's spent grain;
- providing a controller (6) being adapted by suitable software instructions to retrieve from the database (7) information of the content of nutrients, flavour and colour in the brewer's spent grain present in the receptacles (2) and retrieve data of the user input from the input means (8), and wherein the controller (6) is a programmable processor cooperating with a memory storing data and instructions, and wherein once the amount of nutrients, colour and/or flavour are known by the controller 6, it determines the amounts of brewer's spent grain to be delivered from the receptacles (2) corresponding to the use input;
- wherein the controller determines the amount of each of the brewer's spent grain to be delivered from the receptacles (2) to the container (4) on basis of said user input and the information from the database,
- and wherein the controller (6) is being adapted to control the one or more delivery device(s) (3) to deliver individually into the container (4) the metered or weighed amount of brewer's spent grain determined by the controller to be delivered from a receptacle (2) to the the container (4).

2. The method according to claim 1, wherein the method further provides an analyser for analysing the content of nutrients, flavour, and/or colour in a brewer's spent grain.

3. The method according to any of the claims 1 to 2, wherein the brewer's spent grains in the receptacles (2) are selected from the group of solid fractions of brewer's spent grains and liquid fractions of brewer's spent grain.

4. The method according to claim 3, wherein brewer's spent grain in the receptacles (2) are solid fractions of brewer's spent grain.

5. The method according to claim 4, wherein the brewer's spent grain in the receptacles (2) are liquid fractions of brewer's spent grain.

6. The method according to any of claims 3 to 5, wherein solid fractions of brewer's spent grain and/or liquid fractions of brewer's spent grain are derived from at least two different raw brewer's spent grains.

7. The method according to any of the claims 1 to 6, wherein the controller determines the metered or weighed amounts of the one or more brewer's spent grain based on one or more of the following requested user inputs: a requested colour, a requested flavour, a requested nutrient content.

8. The method according to any of the claims 1 to 7, wherein the controller further comprises or has access to a database storing incompability data of nutrients, flavouring compounds and colour in the one or more brewer's spent grains in the receptacles (2).

9. The method according to any of the claims 1 to 8, wherein the receptacle (2) is selected from the group of a silo, a container, a pouch, a sack, a bag, a pipe, a basket, and a kettle.

## Patentansprüche

1. Verfahren zum Herstellen eines Biertrebergemischs aus unterschiedlichen Zusammensetzungen von Biertrebern mit unterschiedlicher Nährstoffzusammensetzung, unterschiedlichem Geschmack und unterschiedlicher Farbe, und wobei das Biertrebergemisch eine Zusammensetzung aufweist, die einer angeforderten Benutzereingabe entspricht, wobei das Verfahren Folgendes umfasst:
- Bereitstellen einer Vielzahl von Behältern (2), wobei jeder Behälter (2) Biertreber umfasst, wobei die Biertreber unabhängig voneinander Folgendes umfassen:
o einen oder mehrere Nährstoffe, einen Geschmack und eine Farbe;
- Bereitstellen einer Datenbank (7), in der Informationen über den Nährstoffgehalt, den Geschmack und die Farbe der in den Behältern (2) vorhandenen Treber gespeichert sind;
- Bereitstellen eines Eingabemittels (8), das dazu ausgelegt ist, eine Eingabe von einem Benutzer eines Biertrebergemischs zu empfangen, das durch das Verfahren zu erhalten ist, wobei die Eingabe von einem Benutzer in das Eingabemittel (8) eine oder mehrere ist, die aus den folgenden Gruppen von Eingaben ausgewählt ist/sind: eine angeforderte Farbe, ein angeforderter Geschmack, ein angeforderter Nährstoffgehalt;
- Bereitstellen einer oder mehrerer Abgabevorrichtungen (3), die jeweils eine Dosiervorrichtung (5) oder Wiegezellen umfassen, wobei die Abgabevorrichtungen (3) dazu ausgelegt sind, von den Behältern (2) eine dosierte oder abgewogene Menge der Biertreber an ein Gebinde (4) abzugeben, um ein Biertrebergemisch zu bilden;
- Bereitstellen einer Steuerung (6), die durch geeignete Softwareanweisungen dazu ausgelegt ist, aus der Datenbank (7) Informationen über den Nährstoffgehalt, den Geschmack und die Farbe der in den Behältern (2) vorhandenen Biertreber abzurufen und Daten über die Benutzereingabe von dem Eingabemittel (8) abzurufen, und wobei die Steuerung (6) ein programmierbarer Prozessor ist, der mit einem Speicher zusammenarbeitet, der Daten und Anweisungen speichert, und wobei, sobald die Menge an Nährstoffen, Farbe und/oder Geschmack durch die Steuerung (6) bekannt sind, er die Mengen an Biertrebern bestimmt, die gemäß der Benutzereingabe aus den Behältern (2) abzugeben ist;
- wobei die Steuerung die Menge von jedem der Biertreber, die von den Behältern (2) an die Gebinde (4) abzugeben ist, auf Grundlage der Benutzereingabe und der Informationen aus der Datenbank bestimmt,
- und wobei die Steuerung (6) dazu ausgelegt ist, die eine oder die mehreren Abgabevorrichtungen (3) so zu steuern, dass sie die dosierte oder abgewogene Menge von Biertrebern, die gemäß der Steuerung aus einem Behälter (2) an das Gebinde (4) abzugeben ist, einzeln in das Gebinde (4) abgibt.

2. Verfahren nach Anspruch 1, wobei das Verfahren ferner einen Analysator zum Analysieren des Nährstoffgehalts, des Geschmacks und/oder der Farbe in Biertrebern bereitstellt.

3. Verfahren nach einem der Ansprüche 1 bis 2, wobei die Biertreber in den Behältern (2) aus der Gruppe von festen Anteilen der Biertreber und flüssigen Anteilen der Biertreber ausgewählt sind.

4. Verfahren nach Anspruch 3, wobei die Treber in den Behältern (2) feste Anteile der Biertreber sind.

5. Verfahren nach Anspruch 4, wobei die Treber in den Behältern (2) flüssige Anteile der Biertreber sind.

6. Verfahren nach einem der Ansprüche 3 bis 5, wobei feste Anteile der Biertreber und/oder flüssige Anteile der Biertreber von mindestens zwei unterschiedlichen Roh-Biertrebern stammen.

7. Verfahren nach einem der Ansprüche 1 bis 6, wobei die Steuerung die dosierten oder abgewogenen Mengen der einen oder der mehreren Biertreber auf Grundlage von einer oder mehreren der folgenden angeforderten Benutzereingaben bestimmt: einer angeforderten Farbe, einem angeforderten Geschmack, einem angeforderten Nährstoffgehalt.

8. Verfahren nach einem der Ansprüche 1 bis 7, wobei die Steuerung ferner eine Datenbank umfasst oder Zugriff darauf hat, in der Daten zu Unverträglichkeit von Nährstoffen, Geschmacksstoffen und Farbe in den Behältern (2) der einen oder der mehreren Treber gespeichert sind.

9. Verfahren nach einem der Ansprüche 1 bis 8, wobei der Behälter (2) aus der Gruppe eines Silos, eines Gebindes, eines Beutels, eines Sacks, einer Tasche, eines Rohres, eines Korbs und eines Kessels ausgewählt ist.

## Revendications

1. Procédé de préparation d'un mélange de drêches de brasserie à partir de différentes compositions de drêches de brasserie possédant une composition nutritionnelle, une saveur et une couleur différentes, et ledit mélange de drêches de brasserie possédant une composition correspondant à une entrée d'utilisateur demandée, le procédé comprenant :
- la fourniture d'une pluralité de récipients (2), chaque récipient (2) comprend une drêche de brasserie, où la drêche de brasserie comprend indépendamment les unes des autres :
∘ un ou plusieurs nutriments, une saveur et une couleur ;
- la fourniture d'une base de données (7) stockant des informations sur la teneur en nutriments, la saveur et la couleur des drêches de brasserie présentes dans les récipients (2) ;
- la fourniture d'un moyen d'entrée (8) adapté pour recevoir une entrée en provenance d'un utilisateur d'un mélange de drêches de brasserie devant être obtenu par le procédé, ladite entrée en provenance d'un utilisateur dans le moyen d'entrée (8) étant une ou plusieurs choisies parmi les groupes suivants d'entrées : une couleur demandée, une saveur demandée, une teneur en nutriments demandée ;
- la fourniture d'un ou plusieurs dispositifs de distribution (3) comprenant chacun un dispositif de dosage (5) ou des cellules de pesée, lesdits dispositifs de distribution (3) étant adaptés pour distribuer à partir des récipients (2) une quantité mesurée ou pesée de drêche de brasserie vers un contenant (4), pour former un mélange de drêches de brasserie ;
- la fourniture d'un dispositif de commande (6) adapté, par des instructions logicielles appropriées, pour extraire de la base de données (7) des informations sur la teneur en nutriments, l'arôme et la couleur des drêches de brasserie présentes dans les récipients (2) et extraire les données de l'entrée d'utilisateur du moyen d'entrée (8), et ledit dispositif de commande (6) étant un processeur programmable coopérant avec une mémoire stockant des données et des instructions, et une fois que la quantité de nutriments, la couleur et/ou la saveur sont connues par le dispositif de commande (6), il détermine les quantités de drêches de brasserie à distribuer à partir des récipients (2) correspondant à l'entrée d'utilisateur ;
- ledit dispositif de commande déterminant la quantité de chacune des drêches de brasserie à distribuer à partir des récipients (2) au contenant (4) sur la base de ladite entrée d'utilisateur et des informations provenant de la base de données,
- et ledit dispositif de commande (6) étant adapté pour commander le ou les dispositifs de distribution (3) pour distribuer individuellement dans le contenant (4) la quantité mesurée ou pesée de drêche de brasserie déterminée par le dispositif de commande à distribuer à partir d'un récipient (2) au contenant (4).

2. Procédé selon la revendication 1, ledit procédé fournissant en outre un analyseur destiné à analyser la teneur en nutriments, la saveur et/ou la couleur dans une drêche de brasserie.

3. Procédé selon l'une quelconque des revendications 1 à 2, lesdites drêches de brasserie dans les récipients (2) étant choisies dans le groupe des fractions solides de drêches de brasserie et des fractions liquides de drêches de brasserie.

4. Procédé selon la revendication 3, lesdites drêches de brasserie dans les récipients (2) étant des fractions solides de drêches de brasserie.

5. Procédé selon la revendication 4, lesdites drêches de brasserie dans les récipients (2) étant des fractions liquides de drêches de brasserie.

6. Procédé selon l'une quelconque des revendications 3 à 5, lesdites fractions solides de drêches de brasserie et/ou lesdites fractions liquides de drêches de brasserie étant dérivées d'au moins deux drêches de brasserie brutes différentes.

7. Procédé selon l'une quelconque des revendications 1 à 6, ledit dispositif de commande déterminant les quantités dosées ou pesées de la ou des drêches de brasserie sur la base d'une ou plusieurs des entrées d'utilisateur demandées suivantes : une couleur demandée, une saveur demandée, une teneur en nutriments demandée.

8. Procédé selon l'une quelconque des revendications 1 à 7, ledit dispositif de commande comprenant en outre ou possédant un accès à une base de données stockant des données d'incompatibilité de nutriments, de composés aromatisants et de couleur dans la ou les drêches de brasserie dans les récipients (2).

9. Procédé selon l'une quelconque des revendications 1 à 8, ledit récipient (2) étant choisi dans le groupe constitué d'un silo, d'un contenant, d'une pochette, d'un sac, d'un sachet, d'un tuyau, d'un panier et d'une bouilloire.
